# FASCICULE DE BREVET EUROPEEN

(11) **EP 1 514 708 B1**
(45) Date de publication et mention de la délivrance du brevet: **18.02.2009**
(21) Numéro de dépôt: 04019014.2
(22) Date de dépôt: 11.08.2004
(51) Int. Cl.: B60H 1/00

(54) **Dispositif de chauffage et/ou climatisation d'habitacle, à gestion aérothermique perfectionnée.**
Heiz und/oder Klimatiserungsvorrichtung für Fahrzeuginnenraum, mit hoch entwickelter aerothermischer Regelung
Heating and/or air conditioning device for vehicle compartment, with sophisticated aerothermic management

(30) Priorité: 12.09.2003 FR 0310751
(43) Date de publication de la demande: 16.03.2005
(73) Titulaire: VALEO SYSTEMES THERMIQUES, 78320 Le Mesnil Saint-Denis (FR)
(72) Inventeur: Vincent, Philippe, 28230 Epernon (FR); Carton, Thomas, 78310 Maurepas (FR)

(56) Documents cités:
- EP-A- 0 909 669
- DE-A- 19 800 103
- FR-A- 2 786 134
- FR-A- 2 787 393
- US-A- 4 947 735
- US-A- 5 967 890

## Description

L'invention concerne les dispositifs de chauffage et/ou climatisation d'habitacle, notamment de véhicule automobile.

Elle concerne plus particulièrement les dispositifs de chauffage et/ou climatisation d'habitacle comprenant un conduit d'alimentation en flux d'air froid, un conduit d'alimentation en flux d'air chaud logeant un radiateur de chauffage, au moins des premier et second conduits de distribution de flux d'air, une chambre de mixage d'air communiquant avec les conduits d'alimentation et avec les premier et second conduits de distribution, et des moyens de contrôle comprenant des premier et deuxième volets munis chacun de parois d'obturation respectives et montés pivotant autour d'un même (premier) axe de manière à être entraînés en rotation, éventuellement simultanément et dans la même direction, pour gérer, éventuellement conjointement, l'accès des flux d'air froid et flux d'air chaud à la chambre de mixage. Un tel dispositif est connu du document US 5 967 890.

Un dispositif de ce type permet lorsque ses premier et deuxième volets sont respectivement de type tambour et drapeau, comme décrit dans le document FR 2787393, de favoriser le mélange des flux d'air froid et flux d'air chaud au niveau de la chambre de mixage, qui constitue alors une chambre de mixage. On obtient ainsi une température homogène dans la chambre de mixage.

Or, dans de nombreuses situations, il est nécessaire, pour des questions de confort aérothermique, de délivrer les flux d'air traités au niveau de certaines bouches de distribution d'air de l'habitacle, selon des températures différentes. En outre, dans ce type de dispositif, la section du conduit d'air chaud est généralement contrainte par la forme du deuxième volet, laquelle ne permet pas toujours de garantir de façon optimale un niveau requis de débit d'air chaud dans certains modes de fonctionnement. Enfin, dans ce type de dispositif, le circuit, qu'emprunte le flux d'air chaud dans la chambre de mixage, en mode "tout chaud", pour gagner le second conduit de distribution, généralement dédié aux pieds des passagers, est "accidenté", ce qui induit une importante perte de charge qui se traduit par des problèmes de bruit et de niveau de débit d'air.

L'invention a donc pour but d'améliorer la situation.

Elle propose à cet effet un dispositif de chauffage et/ou climatisation d'habitacle, notamment de véhicule automobile, du type de celui présenté dans l'introduction, et dans lequel, d'une part, le premier axe est installé de manière à ce que le deuxième volet puisse évoluer entre des positions fermée et ouverte dans lesquelles il interdit ou autorise l'accès d'une partie du flux d'air chaud à une partie amont de la chambre de mixage, et d'autre part, les moyens de contrôle comprennent un troisième volet muni d'une paroi d'obturation chargée de gérer l'accès d'une partie du flux d'air chaud à une partie aval de la chambre de mixage qui communique avec sa partie amont et avec les premier et second conduits de distribution d'air.

Dans une première famille de modes de réalisation le troisième volet est monté pivotant autour d'un second axe éloigné du premier axe.

Cette première famille peut se décliner sous de nombreuses variantes dans lesquelles, par exemple, d'une part, les premier et deuxième volets sont respectivement de type tambour et de type drapeau et forment un ensemble éventuellement monobloc, et d'autre part, le troisième volet est de type drapeau ou papillon.

Par exemple, le dispositif peut comprendre un bras de liaison muni de première et seconde extrémités opposées respectivement montées à rotation sur les deuxième et troisième volets de manière à coupler leurs déplacements. Dans ce cas, le troisième volet peut comporter un chemin de came dans lequel peut se déplacer un axe de rotation de la seconde extrémité. En variante, le dispositif peut comprendre un chemin de came dans lequel peut se déplacer le second axe de rotation du troisième volet afin de le déplacer dans la partie aval de la chambre de mixage.

Dans une seconde famille de modes de réalisation, le troisième volet est monté pivotant autour du premier axe afin d'être entraîné en rotation en même temps et dans la même direction que les premier et second volets, pour gérer conjointement avec eux l'accès des flux d'air froid et flux d'air chaud à la chambre de mixage. Les trois volets constituent ainsi un ensemble.

Cette seconde famille peut se décliner sous de nombreuses variantes dans lesquelles, par exemple, le premier volet est de type tambour et les deuxième et troisième volets tous les deux de type drapeau ou bien forment ensemble un volet de type papillon.

Par exemple, l'ensemble peut être de type monobloc et peut comprendre des premier et second volets drapeau définissant respectivement les second et troisième volets.

Dans une première variante, l'ensemble peut comprendre un premier sous-ensemble constitué du premier volet, un deuxième sous-ensemble constitué d'un premier volet drapeau définissant le second volet, et un troisième sous-ensemble constitué d'un second volet drapeau définissant le troisième volet.

Dans une deuxième variante, l'ensemble peut comprendre un premier sous-ensemble constitué du premier volet, et un second sous-ensemble monobloc constitué de premier et second volets drapeau définissant respectivement les deuxième et troisième volets.

Dans une troisième variante, l'ensemble peut comprendre un premier sous-ensemble monobloc constitué du premier volet et d'un deuxième volet de type drapeau, et un second sous-ensemble constitué du troisième volet sous une forme de type drapeau.

Dans une quatrième variante, l'ensemble peut comprendre un premier sous-ensemble constitué du premier volet, et un second sous-ensemble monobloc constitué d'un volet papillon définissant les deuxième et troisième volets. Dans ce cas, le volet papillon peut être conformé de manière à défléchir et/ou calibrer une partie du flux d'air chaud dans une zone de la partie aval voisine du second conduit de distribution d'air.

Dans une cinquième variante, d'une première part, la chambre de mixage peut comporter au moins deux cloisons définissant au moins trois sous-parties, d'une deuxième part, le second conduit de distribution de flux d'air peut être subdivisé en au moins trois sous-conduits, et d'une troisième part, l'ensemble peut comprendre un premier sous-ensemble de deux volets agencés de manière à gérer conjointement l'accès à une première desdites sous-parties et à un premier desdits sous-conduits, un second sous-ensemble de deux volets agencés de manière à gérer conjointement l'accès à une seconde desdites sous-parties et à un second sous-conduit, et un troisième volet chargé de gérer l'accès à une troisième sous-partie et à un troisième sous-conduit. Dans ce cas, le troisième volet est par exemple placé à un niveau intermédiaire entre, d'une part, ledit premier sous-ensemble de deux volets, et d'autre part, ledit second sous-ensemble de deux volets. Par ailleurs, au moins un volet de chacun des premier et second sous-ensembles, tout comme le troisième volet, sont préférentiellement de type drapeau.

Que le dispositif appartienne à l'une ou l'autre des deux familles, son troisième volet peut être conformé de manière à défléchir et/ou calibrer une partie de l'air chaud dans une première zone de la partie aval voisine du second conduit de distribution d'air, et une autre partie du flux d'air chaud et/ou le flux d'air froid, qui provient de la partie amont, dans une seconde zone de la partie aval distante de la première zone. Par exemple, la seconde zone est voisine du premier conduit de distribution d'air.

Par ailleurs, que le dispositif appartienne à l'une ou l'autre des deux familles, il peut comprendre une paroi, d'une part, délimitant simultanément une partie du second conduit de distribution d'air et une partie du conduit d'alimentation en flux d'air chaud, et d'autre part, comportant une partie d'extrémité implantée dans la partie aval et conformée de manière à orienter et/ou calibrer une partie au moins du flux d'air chaud vers une zone choisie de la partie aval.

En outre, que le dispositif appartienne à l'une ou l'autre des deux familles, l'un au moins des premier et second conduits de distribution d'air peut être subdivisé en au moins des premier et second sous-conduits, et il peut comprendre au moins des moyens de contrôle auxiliaire comportant des quatrième et cinquième volets munis chacun de parois d'obturation respectives et montés pivotant autour d'un même axe de manière à être entraînés en rotation simultanément et dans la même direction pour gérer conjointement l'accès aux premier et second sous-conduits d'un flux d'air traité provenant de la chambre de mixage. Dans ce cas, le cinquième volet est par exemple de type papillon et/ou le quatrième volet est par exemple de type tambour. Les quatrième et cinquième volets peuvent également former un ensemble monobloc.

D'autres caractéristiques et avantages de l'invention apparaîtront à l'examen de la description détaillée ci-après, et des dessins annexés, sur lesquels :
- la figure 1 illustre de façon schématique, dans une vue en coupe transversale médiane, une partie d'un premier mode de réalisation de dispositif de chauffage et/ou climatisation de véhicule automobile, selon l'invention,
- la figure 2 illustre de façon schématique, dans une vue en coupe transversale médiane, une partie d'un deuxième mode de réalisation de dispositif de chauffage et/ou climatisation de véhicule automobile, selon l'invention,
- la figure 3 illustre de façon schématique, dans une vue en coupe transversale médiane, une partie d'un troisième mode de réalisation de dispositif de chauffage et/ou climatisation de véhicule automobile, selon l'invention,
- la figure 4 illustre de façon schématique, dans une vue en coupe transversale médiane, une partie d'un quatrième mode de réalisation de dispositif de chauffage et/ou climatisation de véhicule automobile, selon l'invention,
- la figure 5 détaille, dans une vue en perspective, l'exemple de volet papillon déflecteur constitué des deuxième et troisième volets de la figure 4,
- la figure 6 illustre de façon schématique, dans une vue en coupe transversale médiane, une partie d'un cinquième mode de réalisation de dispositif de chauffage et/ou climatisation de véhicule automobile, selon l'invention,
- la figure 7 illustre de façon schématique, dans une vue en coupe transversale médiane, une partie d'un sixième mode de réalisation de dispositif de chauffage et/ou climatisation de véhicule automobile, selon l'invention,
- la figure 8 illustre de façon schématique, dans une vue en coupe transversale médiane, une partie d'un septième mode de réalisation de dispositif de chauffage et/ou climatisation de véhicule automobile, selon l'invention,
- la figure 9 illustre de façon schématique, dans une vue en coupe transversale médiane, une partie d'un huitième mode de réalisation de dispositif de chauffage et/ou climatisation de véhicule automobile, selon l'invention,
- la figure 10 illustre de façon schématique, dans une vue en coupe transversale médiane, une partie d'un neuvième mode de réalisation de dispositif de chauffage et/ou climatisation de véhicule automobile, selon l'invention,
- la figure 11 est une vue en coupe transversale selon l'axe XI-XI de la figure 10,
- la figure 12 illustre de façon schématique, dans une vue en perspective, l'agencement des premiers, deuxièmes et troisième volets du neuvième mode de réalisation de dispositif de chauffage et/ou climatisation de la figure 10, et
- la figure 13 illustre de façon schématique, dans une vue en coupe transversale médiane, une partie d'un dixième mode de réalisation de dispositif de chauffage et/ou climatisation de véhicule automobile, selon l'invention.

Les dessins annexés pourront non seulement servir à compléter l'invention, mais aussi contribuer à sa définition, le cas échéant.

L'invention concerne un dispositif de chauffage et/ou climatisation d'un habitacle, par exemple de véhicule automobile.

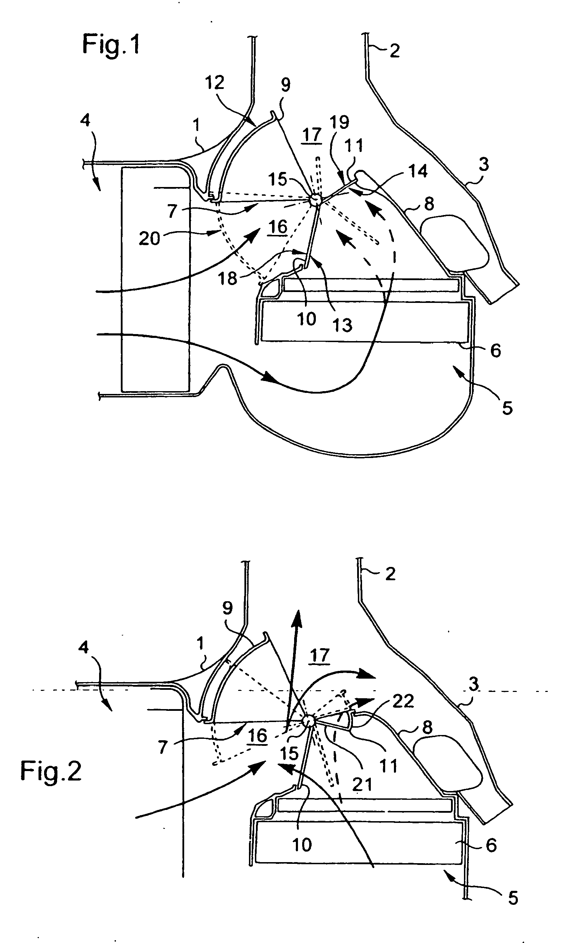

On se réfère tout d'abord à la figure 1 pour décrire un premier mode de réalisation d'un dispositif de chauffage et/ou climatisation selon l'invention pour un véhicule automobile.

Le dispositif illustré comprend un boîtier de traitement et distribution d'air 1 destiné à distribuer de l'air traité dans l'habitacle d'un véhicule automobile, au niveau de bouches de distribution (non représentées), par l'intermédiaire d'au moins deux conduits de distribution 2 et 3. Par exemple, le premier conduit de distribution 2 alimente des bouches de distribution placées dans le tableau de bord du véhicule et à la base du pare-brise, tandis que le second conduit de distribution 3 alimente des bouches de distribution placées au niveau des pieds des passagers.

Le boîtier 1 délimite un conduit d'alimentation en flux d'air froid 4 et un conduit d'alimentation en flux d'air chaud 5 tous deux alimentés en air froid ou recirculé. Le conduit d'alimentation en flux d'air chaud 5, également appelé conduit de réchauffage, loge un radiateur de chauffage 6 parcouru par un liquide chaud, qui est généralement le liquide servant au refroidissement du moteur du véhicule.

Le boîtier 1 délimite enfin une chambre de mixage d'air 7 communiquant avec les conduits d'alimentation 4 et 5 et avec les premier 2 et second 3 conduits de distribution.

Dans le mode de réalisation illustré, une portion d'une partie terminale du conduit de réchauffage 5, placée en aval du radiateur 6, et une portion d'une partie amont du second conduit de distribution 3 sont délimitées par une cloison commune 8.

Selon l'invention, le boîtier 1 loge des moyens de contrôle comprenant de premier 9, deuxième 10 et troisième 11 volets munis chacun de parois d'obturation respectives 12 à 14. Dans ce premier exemple de réalisation, les premier 9, deuxième 10 et troisième 11 volets sont montés pivotant autour d'un même axe de rotation 15. Ils peuvent ainsi être entraînés en rotation simultanément et dans la même direction pour gérer conjointement l'accès des flux d'air froid et flux d'air chaud à la chambre de mixage 7.

Plus précisément, selon l'invention la chambre de mixage 7 est subdivisée en deux parties dites amont 16 et aval 17. L'accès direct à la partie amont 16 est contrôlé par les premier 9 et deuxième 10 volets, et l'accès direct à la partie aval 17 est contrôlé par le troisième volet 11.

A cet effet, l'axe de rotation 15 est installé au voisinage de l'extrémité aval du conduit de réchauffage 5 de manière à définir deux sorties 18 et 19 contrôlées respectivement par les deuxième 10 et troisième 11 volets et débouchant respectivement dans les parties amont 16 et aval 17 de la chambre de mixage 7. Cela permet de définir une section de conduit de réchauffage plus grande que dans les dispositifs de l'art antérieur.

L'axe de rotation 15 et donc les volets 9-11 peuvent être entraînés en rotation entre une première position, matérialisée en traits pleins, dans laquelle la paroi d'obturation 12 du premier volet 9 libère complètement la sortie 20 du conduit d'alimentation en flux d'air froid 4 afin que le flux d'air froid puisse accéder à la partie amont 16 de la chambre de mixage 7, tandis que dans le même temps les parois d'obturation 13 et 14 des deuxième 10 et troisième 11 volets obstruent complètement les sorties 18 et 19 du conduit de réchauffage, interdisant ainsi l'accès du flux d'air chaud à la chambre de mixage 7 (position fermée), et une seconde position, matérialisée en traits interrompus, dans laquelle la paroi d'obturation 12 du premier volet 9 obstrue complètement la sortie 20 du conduit d'alimentation en flux d'air froid 4 afin d'interdire l'accès du flux d'air froid à la partie amont 16 de la chambre de mixage 7, tandis que dans le même temps les parois d'obturation 13 et 14 des deuxième 10 et troisième 11 volets libèrent complètement les sorties 18 et 19 du conduit de réchauffage afin que le flux d'air chaud puisse pénétrer dans la partie aval 16 via la sortie 18 et dans la partie aval 17 via la sortie 19 (position ouverte).

En d'autres termes, dans la première position seul le flux d'air froid alimente la chambre de mixage 7 et donc les premier 2 et second 3 conduits de distribution, tandis que dans la seconde position seul le flux d'air chaud alimente la chambre de mixage 7 et donc les premier 2 et second 3 conduits de distribution.

Bien entendu, on prévoit au moins une position intermédiaire dans laquelle chacune des sorties 18 à 20 est partiellement obstruée, de sorte que la partie amont 16 soit alimentée en flux d'air froid et flux d'air chaud en vue d'un mélange (ou mixage) et que la partie aval 17 soit alimentée en air mélangé provenant de la partie amont 16 et en flux d'air chaud provenant de la sortie 19 contrôlée par le troisième volet 11.

Préférentiellement, comme illustré, dans ce premier mode de réalisation le premier volet 9 est de type tambour, et les deuxième 10 et troisième 11 volets sont de type drapeau.

Les premier 9, deuxième 10 et troisième 11 volets constituent avantageusement un ensemble qui peut être de type monobloc. Mais en variante, cet ensemble peut être subdivisé en un premier sous-ensemble constitué du seul premier volet 9 et d'un second sous-ensemble de type monobloc constitué des deuxième 10 et troisième 11 volets. Dans cette variante, les deuxième 10 et troisième 11 volets peuvent également constituer un unique volet de type drapeau.

Les formes respectives des volets 9-11 sont choisies de manière à contrôler avec précision les lieux où les différents flux sont injectés dans la chambre de mixage 7. Cela est encore plus particulièrement le cas du troisième volet 11 dont la forme est préférentiellement choisie de manière à permettre l'injection d'une partie du flux d'air chaud au voisinage de l'entrée du second conduit de distribution 3 lorsqu'il est dédié aux pieds des passagers. Cela permet en effet de créer une différence de température positive entre l'air chaud qui alimente les bouches de distribution des pieds et l'air chaud qui alimente les autres bouches de distribution.

Ce premier mode de réalisation permet également de faciliter la gestion de la stratification de température entre les différentes bouches de distribution.

On se réfère maintenant à la figure 2 pour décrire un deuxième mode de réalisation d'un dispositif de chauffage et/ou climatisation selon l'invention pour un véhicule automobile. Il s'agit d'une première variante du premier mode de réalisation décrit ci-avant en référence à la figure 1, dans laquelle seule la forme du troisième volet 11 a été modifiée. Par conséquent, tout ce qui a été dit pour le premier mode de réalisation demeure valable ici.

Dans ce deuxième mode de réalisation, le troisième volet 11 comporte une partie 21 sensiblement plane prolongée par une partie incurvé 22 orientée vers la partie aval 17. Cela permet de contraindre dans la seconde position, d'une part, la partie du flux d'air chaud qui pénètre dans la partie amont 16 de la chambre de mixage 7 par la sortie 18 à se diriger vers le premier conduit de distribution 2, après avoir été défléchi par des faces arrière des parties 21 et 22 du troisième volet 11, et d'autre part, l'autre partie du flux d'air chaud qui pénètre dans la partie aval 17 de la chambre de mixage 7 par la sortie 19 à se diriger vers le second conduit de distribution 3, après avoir été défléchi et/ou calibré par la face avant de la partie 21 du troisième volet 11.

Ce deuxième mode de réalisation permet donc de calibrer les flux d'air chaud destinés à alimenter les conduits de distribution 2 et 3, et de faciliter encore plus la gestion de la stratification de température entre les différentes bouches de distribution.

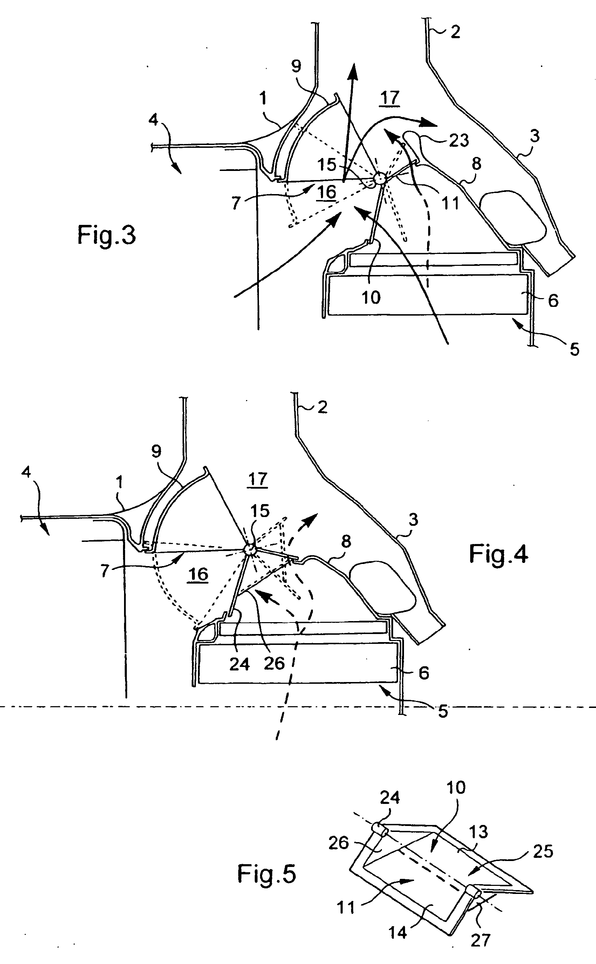

On se réfère maintenant à la figure 3 pour décrire un troisième mode de réalisation d'un dispositif de chauffage et/ou climatisation selon l'invention pour un véhicule automobile. Il s'agit d'une deuxième variante du premier mode de réalisation décrit ci-avant en référence à la figure 1.

Dans ce troisième mode de réalisation, la cloison commune 8 est terminée par une partie d' extrémité 23 dont la forme est choisie de manière à contrôler la circulation des flux d'air chaud, flux d'air mélangé et flux d'air froid à l'intérieur de la partie aval 17 de la chambre de mixage 7, en particulier lorsque les moyens de contrôle sont placés dans une position intermédiaire (matérialisée en traits interrompus).

Ce troisième mode de réalisation permet également de calibrer les flux d'air chaud destinés à alimenter les conduits de distribution 2 et 3, et de faciliter la gestion de la stratification de température entre les différentes bouches de distribution.

On se réfère maintenant à la figure 4 pour décrire un quatrième mode de réalisation d'un dispositif de chauffage et/ou climatisation selon l'invention pour un véhicule automobile. Il s'agit d'une troisième variante du premier mode de réalisation décrit ci-avant en référence à la figure 1, dans laquelle les formes des deuxième 10 et troisième 11 volets ont été modifiées. Par conséquent, tout ce qui a été dit pour le premier mode de réalisation demeure valable ici.

Dans ce quatrième mode de réalisation, les deuxième 10 et troisième 11 volets constituent au moins un sous-ensemble monobloc se présentant sous la forme d'un volet papillon 24 du type de celui illustré, à titre d'exemple, sur la figure 5. Ils peuvent également constituer avec le premier volet 9 un ensemble monobloc.

Le volet papillon 24 comprend une paroi principale 25 constituée par les parois d'obturation 13 et 14 et deux parois latérales 26 et 27 solidaires de la paroi principale 25. Le volet papillon 24 définit ainsi une espèce de canal. En mode tout froid, c'est-à-dire lorsque le premier volet 9 est dans la position représentée en trait plein, le canal (formé des éléments 25 à 27) augmente sensiblement la section de passage d'air froid, diminuant ainsi les pertes de charge et les nuisances acoustiques à niveau de débit identique. Ce mode de réalisation facilite également l'accès du flux d'air froid dans le conduit de distribution 3, étant donné que l'axe 15 ne vient plus le gêner.

En revanche, en mode tout chaud, le canal (formé des éléments 25 à 27) favorise la montée d'air chaud vers le conduit de distribution 2 et gère, de façon ingénieuse, l'écoulement du flux d'air chaud vers le conduit de distribution 3. Cette gestion est plus précisément assurée par un espace prédéterminé, entre la paroi principale 25 et l'extrémité 23 de la paroi 8, qui crée une fuite calibrée.

Ce quatrième mode de réalisation permet également de faciliter la gestion de la stratification de température entre les différentes bouches de distribution, mais il permet aussi de rendre moins accidentés les circuits empruntés par les flux d'air chaud dans la chambre de mixage 7 dans un mode de fonctionnement dit "mode pieds" dans lequel tout l'air traité alimente le second conduit de distribution 3.

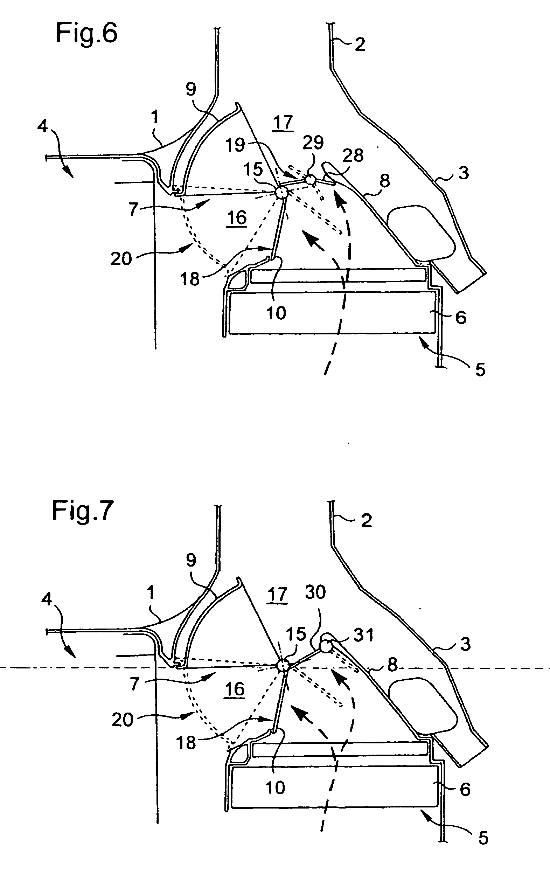

On se réfère maintenant à la figure 6 pour décrire un cinquième mode de réalisation d'un dispositif de chauffage et/ou climatisation selon l'invention, pour un véhicule automobile. Ce cinquième mode de réalisation reprend une grande partie des éléments constituant le premier mode de réalisation décrit précédemment en référence à la figure 1. Par conséquent, des éléments du dispositif de la figure 6 sensiblement identiques à ceux du dispositif de la figure 1 portent des références identiques.

Ce qui différencie le cinquième mode de réalisation du premier, c'est essentiellement son troisième volet 28. Celui-ci est ici réalisé sous la forme d'un volet papillon dont l'axe de rotation 29 est distant de l'axe de rotation 15 qui contrôle le déplacement conjoint des premier 9 et deuxième 10 volets, lesquels sont toujours, et préférentiellement, réalisés sous la forme de volet tambour et volet drapeau, respectivement.

Les axes de rotation 15 et 29 peuvent être entraînés en rotation soit dans des sens opposés comme illustré sur la figure 6, soit dans un même sens.

Les premier 9 et deuxième 10 volets, d'une part, et le troisième volet 28, d'autre part, ont des mouvements synchronisés. Mais, ils peuvent s'ouvrir ou se fermer selon des lois différentes, le troisième volet 28 s'ouvrant par exemple plus ou moins vite que les premier 9 et deuxième 10 volets.

Par ailleurs, comme dans le premier mode de réalisation, les premier 9 et deuxième 10 volets constituent un ensemble qui peut être de type monobloc.

Dans l'exemple illustré, l'extrémité de la partie gauche du volet papillon 28 vient au contact de l'axe de rotation 15 lorsque les moyens de contrôle sont dans leur première position. Mais, dans une variante, le boîtier 1 pourrait comporter une portion de cloison permettant à cette extrémité de venir s'appuyer contre elle.

Ce cinquième mode de réalisation permet d'agrandir encore plus la section du conduit de réchauffage 5, mais également d'injecter deux portions de flux d'air chaud en deux parties distinctes de la partie aval 17 de la chambre de mixage 7. Par exemple, une première portion est plus particulièrement destinée à alimenter le premier conduit de distribution 2, tandis qu'une seconde portion est plus particulièrement destinée à alimenter le second conduit de distribution 3.

Ce cinquième mode de réalisation permet également de faciliter la gestion de la stratification de température entre les différentes bouches de distribution, mais il permet aussi de rendre moins accidentés les circuits empruntés par les flux d'air chaud dans la chambre de mixage 7 dans le mode pieds précité.

On se réfère maintenant à la figure 7 pour décrire un sixième mode de réalisation d'un dispositif de chauffage et/ou climatisation selon l'invention pour un véhicule automobile. Il s'agit d'une variante du cinquième mode de réalisation décrit ci-avant en référence à la figure 6, dans laquelle seul le type du troisième volet 11 a été modifié.

Dans ce sixième mode de réalisation, le troisième volet 30 n'est plus de type papillon. Il est désormais de type drapeau. Comme dans le cinquième mode de réalisation, son axe de rotation 31 est distant de l'axe de rotation 15 qui contrôle le déplacement conjoint des premier 9 et deuxième 10 volets, lesquels sont toujours, et préférentiellement, réalisés sous la forme de volet tambour et volet drapeau, respectivement.

Les premier 9 et deuxième 10 volets, d'une part, et le troisième volet 30, d'autre part, ont des mouvements synchronisés. Mais, ils peuvent s'ouvrir ou se fermer selon des lois différentes, le troisième volet 30 s'ouvrant par exemple plus ou moins vite que les premier 9 et deuxième 10 volets.

L'axe de rotation 31 est ici placé contre la cloison commune 8 qui, comme dans le troisième mode de réalisation décrit précédemment en référence à la figure 3, peut comporter une partie d'extrémité conformée pour gérer la circulation et la distribution des flux dans la partie aval 17 de la chambre de mixage 7.

Les axes de rotation 15 et 31 peuvent être entraînés en rotation soit dans un même sens comme illustré sur la figure 7, soit dans des sens opposés.

Par ailleurs, comme dans le premier mode de réalisation, les premier 9 et deuxième 10 volets constituent un ensemble qui peut être de type monobloc.

Dans l'exemple illustré, l'extrémité de la partie gauche du (troisième) volet drapeau 30 vient au contact de l'axe de rotation 15 lorsque les moyens de contrôle sont dans leur première position. Mais, dans une variante, le boîtier 1 pourrait comporter une portion de cloison permettant à cette extrémité de venir s'appuyer contre elle.

Ce sixième mode de réalisation permet également de faciliter la gestion de la stratification de température entre les différentes bouches de distribution.

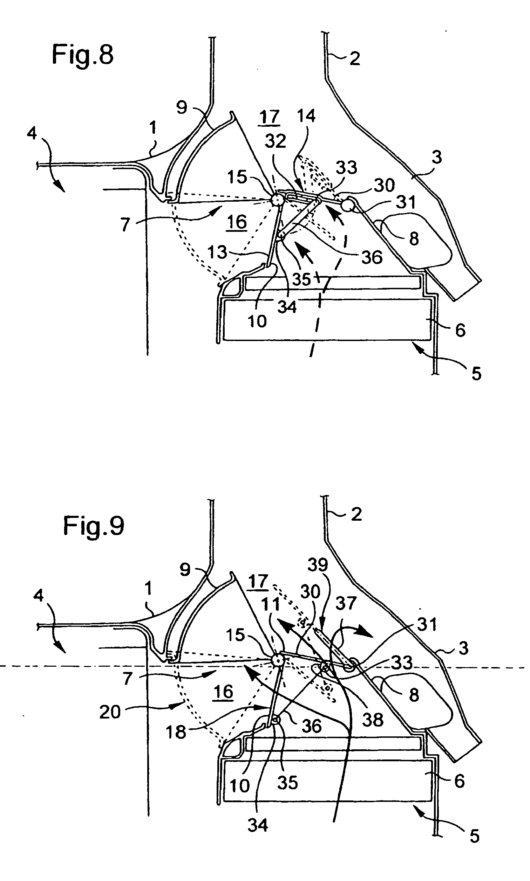

On se réfère maintenant à la figure 8 pour décrire un septième mode de réalisation d'un dispositif de chauffage et/ou climatisation selon l'invention pour un véhicule automobile. Il s'agit d'une variante du sixième mode de réalisation décrit ci-avant en référence à la figure 7, dans laquelle seul le troisième volet 11 a été modifié.

Dans ce septième mode de réalisation, la paroi d'obturation 14 du troisième volet (de type drapeau) 30 comporte un chemin de came 32, ici de type linéaire, dans lequel peut se mouvoir un premier axe de rotation 33. Par ailleurs, la paroi d'obturation 13 du deuxième volet 10 comporte une patte 34 sur laquelle est monté à rotation un second axe de rotation 35. Ces premier 33 et second 35 axes de rotation sont solidaires d'extrémités opposées d'une tige 36, de préférence rigide, qui assure le couplage des deuxième 10 et troisième 30 volets. Ainsi, en entraînant en rotation dans un sens choisi l'axe de rotation 15, la tige 36 contraint l'axe de rotation 31 à tourner dans un sens opposé tandis que le premier axe 33 se translate dans le chemin de came 32.

Grâce à cette tige 36, on peut agrandir la section du conduit de réchauffage 5, et contraindre une partie du flux d'air chaud à pénétrer profondément à l'intérieur de la partie aval 17 de la chambre de mixage 7.

Comme dans le premier mode de réalisation, les premier 9 et deuxième 10 volets constituent un ensemble qui peut être de type monobloc.

Dans l'exemple illustré, l'extrémité de la partie gauche du (troisième) volet drapeau 30 vient au contact de l'axe de rotation 15 lorsque les moyens de contrôle sont dans leur première position. Mais, dans une variante, le boîtier 1 pourrait comporter une portion de cloison permettant à cette extrémité de venir s'appuyer contre elle.

Ce septième mode de réalisation permet également de faciliter la gestion de la stratification de température entre les différentes bouches de distribution.

On se réfère maintenant à la figure 9 pour décrire un huitième mode de réalisation d'un dispositif de chauffage et/ou climatisation selon l'invention pour un véhicule automobile. Il s'agit d'une variante du septième mode de réalisation décrit ci-avant en référence à la figure 8.

Dans ce huitième mode de réalisation, au lieu de placer le chemin de came sur la paroi d'obturation 14 du troisième volet (de type drapeau) 30, celui-ci (37) est formé sur le fond du boîtier 1. Ce chemin de came 37, dans lequel peut se mouvoir l'axe de rotation 31 du troisième volet 30, est préférentiellement de forme linéaire. La paroi d'obturation 14 du troisième volet (de type drapeau) 30 comporte une patte de fixation 38 sur laquelle est monté à rotation un premier axe de rotation 33. Par ailleurs, la paroi d'obturation 13 du deuxième volet 10 comporte une patte 34 sur laquelle est monté à rotation un second axe de rotation 35. Ces premier 33 et second 35 axes de rotation sont solidaires d'extrémités opposées d'une tige 36, de préférence rigide, qui assure le couplage des deuxième 10 et troisième 30 volets. Ainsi, en entraînant en rotation dans un sens choisi l'axe de rotation 15, la tige 36 contraint l'axe de rotation 31 à tourner dans un sens opposé et à se translater dans le chemin de came 37.

Le troisième volet 30 constitue ainsi une espèce de cloison mobile qui se déplace dans la partie aval 17 de la chambre de mixage 7 en libérant progressivement une ouverture 39 qui permet à une partie du flux d'air chaud, issue de l'ouverture 19, de rejoindre le second conduit de distribution 3, tandis que l'autre partie du flux d'air chaud rejoint tout d'abord la partie amont 16 via l'ouverture 18, puis la partie haute de la partie aval 17 avant de pénétrer dans le premier conduit de distribution 2.

Comme dans le premier mode de réalisation, les premier 9 et deuxième 10 volets constituent un ensemble qui peut être de type monobloc.

Dans l'exemple illustré, l'extrémité de la partie gauche du (troisième) volet drapeau 30 vient au contact de l'axe de rotation 15 lorsque les moyens de contrôle sont dans leur première position. Mais, dans une variante, le boîtier 1 pourrait comporter une portion de cloison permettant à cette extrémité de venir s'appuyer contre elle.

Ce huitième mode de réalisation permet également de faciliter la gestion de la stratification de température entre les différentes bouches de distribution, mais il permet aussi de rendre moins accidentés les circuits empruntés par les flux d'air chaud dans la chambre de mixage 7 dans le mode pieds précité.

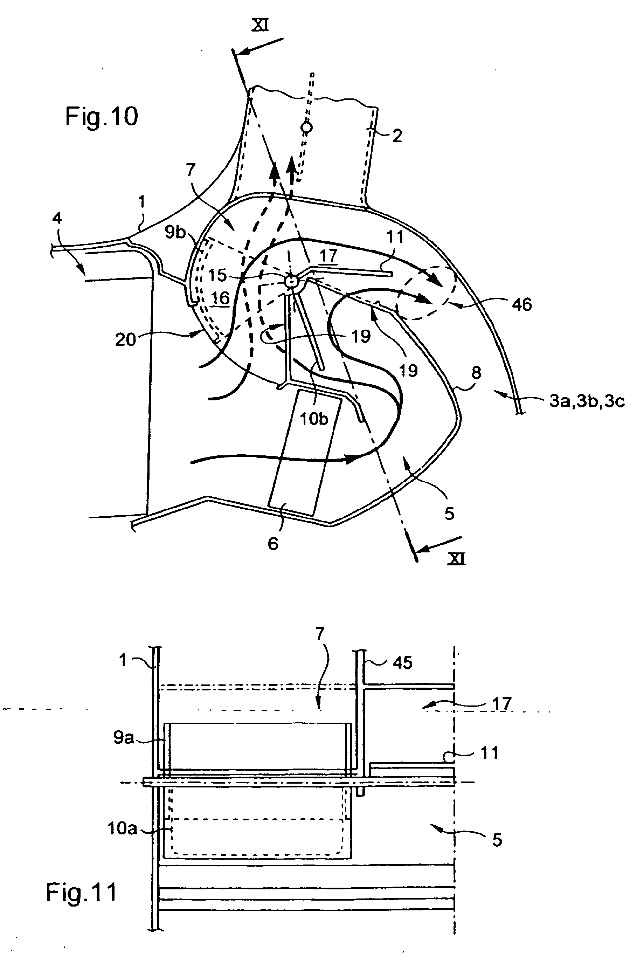

On se réfère maintenant aux figures 10 à 12 pour décrire un neuvième mode de réalisation d'un dispositif de chauffage et/ou climatisation selon l'invention pour un véhicule automobile. Ce neuvième mode de réalisation reprend l'intégralité des éléments constituant le premier mode de réalisation décrit précédemment en référence à la figure 1. Ce qui l'en différencie, c'est, d'une part, les agencements respectifs de la chambre de mixage 7 et du second conduit de distribution d'air 3, et d'autre part, la présence de deux premiers volets 9a et 9b et de deux deuxièmes volets 10a et 10b.

En effet, dans ce neuvième mode de réalisation, comme illustré sur la figure 11, la chambre de mixage 7 et le conduit de distribution 3 sont subdivisés par au moins deux cloisons 45 en au moins trois sous-parties, par exemple deux latérales et une centrale. De la sorte, le conduit de distribution 3 définit au moins trois sous-conduits 3a à 3c, comme par exemple deux sous-conduits latéraux 3a et 3b entre lesquels (ou dans lesquels) est placé (ou inséré) un sous-conduit "central" 3c. Ce sous-conduit central 3c est par exemple dédié à une zone particulière de l'habitacle qui requiert une température différente de celles alimentées par les deux sous-conduits latéraux. Cette zone particulière peut être par exemple la zone d'aération arrière, ou la zone des pieds arrière, ou encore la zone des pieds avant. Comme illustré sur la figure 10, ce sous-conduit central 3c est préférentiellement alimenté par une chambre de mixage auxiliaire 46, indépendante, formée dans la chambre de mixage 7, au voisinage de l'entrée du conduit de distribution 3.

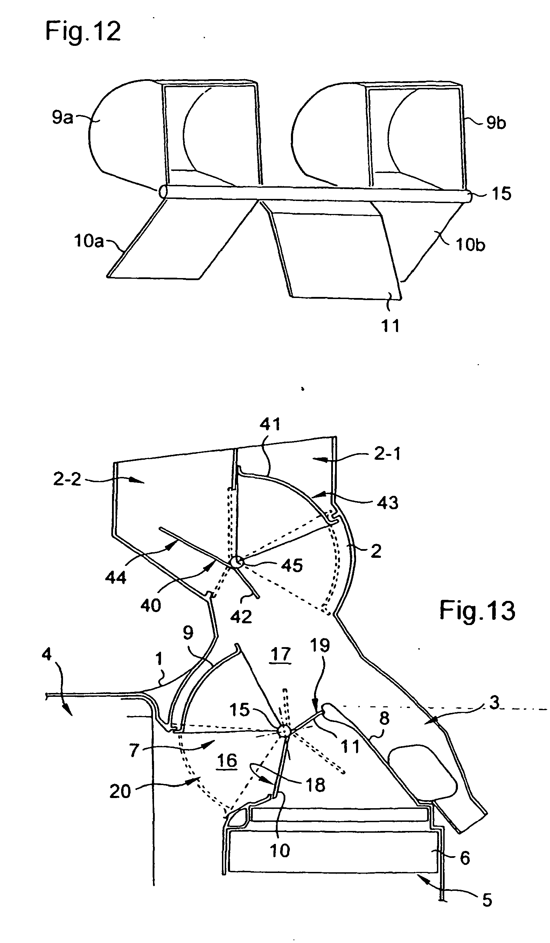

Comme cela est mieux illustré sur la figure 12, la gestion de l'accès aux trois sous-parties de la chambre de mixage 7 et aux trois sous-conduits de distribution d'air 3a à 3c est ici assurée par deux premiers volets de type tambour 9a et 9b, deux deuxièmes volets de type drapeau 10a et 10b et un troisième volet de type drapeau 11, montés sur l'axe 15. Plus précisément, le premier volet 9a (respectivement 9b) et le deuxième volet 10a (respectivement 10b) constituent un ensemble, éventuellement monobloc, du type de celui présenté ci-avant en référence à la figure 1. Chaque ensemble (9a, 10a) et (9b, 10b) gère l'accès aux deux sous-parties latérales de la chambre de mixage 7 et aux deux sous-conduits latéraux 3a et 3b. Le troisième volet 11 gère l'accès à la chambre de mixage auxiliaire 46 et donc au sous-conduit central 3c, via la sortie 19. Lorsque le troisième volet 11 est en position ouverte, matérialisée en trait plein sur la figure 10, une partie du flux d'air chaud provenant du conduit de réchauffage 5 alimente directement la chambre de mixage auxiliaire 46, tandis que les parties complémentaires alimentent les deux sous-parties de la chambre de mixage 7. De la sorte, l'aérothermie dans la chambre de mixage auxiliaire 46 n'est pas la même que celle dans les deux sous-parties latérales de la chambre de mixage 7.

Ce neuvième mode de réalisation permet non seulement de faciliter la gestion de la stratification de température entre les différentes bouches de distribution, mais il permet également d'optimiser les performances aéroliques.

On se réfère maintenant à la figure 13 pour décrire un dixième mode de réalisation d'un dispositif de chauffage et/ou climatisation selon l'invention pour un véhicule automobile. Ce dixième mode de réalisation reprend l'intégralité des éléments constituant le premier mode de réalisation décrit précédemment en référence à la figure 1. Ce qui l'en différencie, c'est le fait qu'il comporte en complément des moyens de contrôle auxiliaire 40 gérant l'accès à des sous-conduits 2-1 et 2-2 du premier conduit de distribution 2.

Ces moyens de contrôle auxiliaire 40 comportent des quatrième 41 et cinquième 42 volets munis chacun de parois d'obturation respectives 43 et 44 et montés pivotant autour d'un même axe de rotation 45 de manière à être entraînés en rotation simultanément et dans la même direction pour gérer conjointement l'accès aux premier 2-1 et second 2-2 sous-conduits d'un flux d'air traité provenant de la partie aval 17 de la chambre de mixage 7.

Dans l'exemple illustré, le cinquième volet 42 est de type papillon et le quatrième volet de type tambour. Au lieu de prévoir un cinquième volet de type papillon, on pourrait prévoir un cinquième volet de type drapeau et un sixième volet de type drapeau ou papillon, éventuellement monté à rotation sur un axe distant de l'axe de rotation 45.

En fait, les moyens de contrôle auxiliaire 40 peuvent être agencés sensiblement de la même façon que les moyens de contrôle constitués des premier, deuxième et troisième volets, décrits précédemment en référence aux figures 1 à 9.

En complément ou en remplacement, de tels moyens de contrôle auxiliaire 40 peuvent être implantés dans le second conduit de distribution 3, lorsque celui-ci est subdivisé en deux sous-conduits.

L'invention ne se limite pas aux modes de réalisation de dispositif de chauffage et/ou climatisation décrits ci-avant, seulement à titre d'exemple, mais elle englobe toutes les variantes que pourra envisager l'homme de l'art dans le cadre des revendications ci-après.

## Revendications

1. Dispositif de chauffage et/ou climatisation d'un habitacle, notamment de véhicule automobile, comprenant au moins un conduit d'alimentation en flux d'air froid (4), au moins un conduit d'alimentation en flux d'air chaud (5) logeant un radiateur de chauffage (6), au moins de premier (2) et second (3) conduits de distribution de flux d'air, au moins une chambre de mixage d'air (7) communiquant avec lesdits conduits d'alimentation en flux d'air froid et en flux d'air chaud et avec lesdits premier et second conduits de distribution, et des moyens de contrôle comprenant de premier (9) et deuxième (10) volets munis chacun de parois d'obturation respectives (12, 13) et montés pivotant autour d'un même premier axe (15) pour gérer l'accès desdits flux d'air froid et flux d'air chaud à ladite chambre de mixage (7), **caractérisé en ce que** ledit premier axe (15) est installé de sorte que ledit deuxième volet (10) puisse évoluer entre des positions fermée et ouverte dans lesquelles il interdit ou autorise l'accès d'une partie dudit flux d'air chaud à une partie amont (16) de ladite chambre de mixage (7), et **en ce que** lesdits moyens de contrôle comprennent un troisième volet (11; 28; 30) muni d'une paroi d'obturation (14) propre à gérer l'accès d'une partie au moins dudit flux d'air chaud à une partie aval (17) de ladite chambre de mixage (7) communiquant avec ladite partie amont (16) et avec lesdits premier (2) et second (3) conduits de distribution d'air.

2. Dispositif selon la revendication 1, **caractérisé en ce que** lesdits premier (9) et deuxième (10) volets sont montés pivotant autour dudit premier axe (15) de manière à être entraînés en rotation simultanément et dans la même direction pour gérer conjointement l'accès desdits flux d'air froid et flux d'air chaud à ladite chambre de mixage (7).

3. Dispositif selon l'une des revendication 1 et 2, **caractérisé en ce que** ledit troisième volet (28; 30) est monté pivotant autour d'un second axe de rotation (29; 31) éloigné dudit premier axe (15).

4. Dispositif selon la revendication 3, **caractérisé en ce que** ledit troisième volet (28) est un volet papillon.

5. Dispositif selon la revendication 3, **caractérisé en ce que** ledit troisième volet (30) est un volet drapeau.

6. Dispositif selon la revendication 5, **caractérisé en ce qu'**il comprend un bras de liaison (36) muni de première et seconde extrémités opposées respectivement montées à rotation sur lesdits deuxième (10) et troisième (30) volets de manière à coupler leurs déplacements.

7. Dispositif selon la revendication 6, **caractérisé en ce que** ledit troisième volet (30) comporte un chemin de came (32) dans lequel peut se déplacer un axe de rotation (33) que comprend ladite seconde extrémité du bras de liaison (36).

8. Dispositif selon la revendication 6, **caractérisé en ce qu'**il comprend un chemin de came (37) dans lequel peut se déplacer ledit second axe de rotation (31) dudit troisième volet (30) de manière à le déplacer dans ladite partie aval (17) de la chambre de mixage (7).

9. Dispositif selon l'une des revendications 3 à 8, **caractérisé en ce que** lesdits premier (9) et second (10) volets forment un ensemble monobloc.

10. Dispositif selon l'une des revendications 3 à 9, **caractérisé en ce que** ledit deuxième volet (10) est un volet drapeau.

11. Dispositif selon la revendication 2, **caractérisé en ce que** ledit troisième volet (11) est monté pivotant autour dudit premier axe (15) de manière à être entraîné en rotation simultanément et dans la même direction que lesdits premier (9) et second (10) volets, pour gérer conjointement avec eux l'accès desdits flux d'air froid et flux d'air chaud à ladite chambre de mixage (7), lesdits premier (9), deuxième (10) et troisième (11) volets constituant un ensemble.

12. Dispositif selon la revendication 11, **caractérisé en ce que** ledit ensemble est de type monobloc et comprend des premier et second volets drapeau définissant respectivement lesdits second (10) et troisième (11) volets.

13. Dispositif selon la revendication 11, **caractérisé en ce que** ledit ensemble comprend un premier sous-ensemble constitué dudit premier volet (9), un deuxième sous-ensemble constitué d'un premier volet drapeau définissant ledit second volet (10), et un troisième sous-ensemble constitué d'un second volet drapeau définissant ledit troisième volet (11).

14. Dispositif selon la revendication 11, **caractérisé en ce que** ledit ensemble comprend un premier sous-ensemble constitué dudit premier volet (9), et un second sous-ensemble monobloc constitué de premier et second volets drapeau définissant respectivement lesdits deuxième (10) et troisième (11) volets.

15. Dispositif selon la revendication 11, **caractérisé en ce que** ledit ensemble comprend un premier sous-ensemble monobloc constitué dudit premier volet (9) et d'un deuxième volet (10) de type drapeau, et un second sous-ensemble constitué dudit troisième volet (11) sous une forme de type drapeau.

16. Dispositif selon la revendication 11, **caractérisé en ce que** ledit ensemble comprend un premier sous-ensemble constitué dudit premier volet (9), et un second sous-ensemble monobloc constitué d'un volet papillon (24) définissant lesdits deuxième (10) et troisième (11) volets.

17. Dispositif selon la revendication 16, **caractérisé en ce que** ledit volet papillon (24) est conformé de manière à défléchir une partie dudit flux d'air chaud dans une zone de ladite partie aval (17) voisine dudit second conduit de distribution d'air (3).

18. Dispositif selon la revendication 11, **caractérisé en ce que** ladite chambre de mixage (7) est subdivisée par des cloisons (45) en au moins trois sous-parties, que ledit second conduit de distribution de flux d'air (3) est subdivisé en au moins trois sous-conduits (3a-3c), et que ledit ensemble comprend un premier sous-ensemble de deux volets (9a, 10a) agencés de manière à gérer conjointement l'accès à une première desdites sous-parties et à un premier (3a) desdits sous-conduits, un second sous-ensemble de deux volets (9b, 10b) agencés de manière à gérer conjointement l'accès à une seconde desdites sous-parties et à un second (3b) desdits sous-conduits, et un troisième volet (11) agencé de manière à gérer l'accès à une troisième desdites sous-parties et à un troisième (3c) desdits sous-conduits.

19. Dispositif selon la revendication 18, **caractérisé en ce que** ledit troisième volet (11) est placé à un niveau intermédiaire entre, d'une part, ledit premier sous-ensemble de deux volets (9a, 10), et d'autre part, ledit second sous-ensemble de deux volets (9b, 10b).

20. Dispositif selon l'une des revendications 18 et 19, **caractérisé en ce qu'**au moins un volet (10a, 10b) de chacun des premier et second sous-ensembles et ledit troisième volet (11) sont de type drapeau.

21. Dispositif selon l'une des revendications 1 à 20, **caractérisé en ce que** ledit troisième volet (11, 21, 22) est conformé de manière à défléchir et/ou calibrer une partie dudit flux d'air chaud dans une première zone de ladite partie aval (17) voisine dudit second conduit de distribution d'air (3), et une autre partie dudit flux d'air chaud et/ou ledit flux d'air froid, provenant de ladite partie amont (16), dans une seconde zone de ladite partie aval (17) distante de ladite première zone.

22. Dispositif selon la revendication 21, **caractérisé en ce que** ladite seconde zone est voisine dudit premier conduit de distribution d'air (2).

23. Dispositif selon l'une des revendications 1 à 22, **caractérisé en ce qu'**il comprend une paroi (8) délimitant simultanément une partie dudit second conduit de distribution d'air (3) et une partie dudit conduit d'alimentation en flux d'air chaud (5) et comportant une partie d'extrémité (23) implantée dans ladite partie aval (17) et conformée de manière à orienter et/ou calibrer une partie au moins dudit flux d'air chaud vers une zone choisie de ladite partie aval (17).

24. Dispositif selon l'une des revendications 1 à 23, **caractérisé en ce que** ledit premier volet (9) est un volet tambour.

25. Dispositif selon l'une des revendications 1 à 24, **caractérisé en ce que** l'un au moins desdits premier (2) et second (3) conduits de distribution d'air est subdivisé en au moins de premier (2-1) et second (2-2) sous-conduits, et **en ce qu'**il comprend au moins des moyens de contrôle auxiliaire (40) comportant de quatrième (41) et cinquième (42) volets munis chacun de parois d'obturation respectives (43, 44) et montés pivotant autour d'un même axe (45) de manière à être entraînés en rotation simultanément et dans la même direction pour gérer conjointement l'accès auxdits premier (2-1) et second (2-2) sous-conduits d'un flux d'air traité provenant de ladite chambre de mixage (7).

26. Dispositif selon la revendication 25, **caractérisé en ce que** ledit cinquième volet (42) est un volet papillon.

27. Dispositif selon l'une des revendications 25 et 26, **caractérisé en ce que** ledit quatrième volet (41) est un volet tambour.

28. Dispositif selon l'une des revendications 25 à 27, **caractérisé en ce que** lesdits quatrième (41) et cinquième (42) volets forment un ensemble monobloc.

## Claims

1. Heating and/or air conditioning device for a compartment, especially a motor vehicle compartment, comprising at least one cold-air flow feed duct (4), at least one hot-air flow feed duct (5) accommodating a radiator (6), at least first (2) and second (3) air-flow distribution ducts, at least one air-mixing chamber (7) communicating with the said cold-air flow and hot-air flow feed ducts and with the said first and second distribution ducts, and control means comprising first (9) and second (10) flaps each provided with respective closure walls (12, 13) and mounted pivotably about a same first axis (15) in order to manage the access of the said cold-air flow and hot-air flow to the said mixing chamber (7), **characterized in that** the said first axis (15) being installed such that the said second flap (10) can shift between closed and open positions in which it denies or grants access of a part of the said hot-air flow to an upstream portion (16) of the said mixing chamber (7), the said control means comprise a third flap (11; 28; 30) provided with a closure wall (14) suitable for managing access of a part at least of the said hot-air flow to a downstream portion (17) of the said mixing chamber (7) communicating with the said upstream portion (16) and with the said first (2) and second (3) air-distribution ducts.

2. Device according to Claim 1, **characterized in that** the said first (9) and second (10) flaps are mounted pivotably about the said first axis (15) so as to be set in rotation at the same time and in the same direction in order jointly to manage the access of the said cold-air flow and hot-air flow to the said mixing chamber (7).

3. Device according to one of Claims 1 and 2, **characterized in that** the said third flap (28; 30) is mounted pivotably about a second rotational axis (29, 31) remote from the first axis (15).

4. Device according to Claim 3, **characterized in that** the said third flap (28) is a butterfly flap.

5. Device according to Claim 3, **characterized in that** the said third flap (30) is a flag flap.

6. Device according to Claim 5, **characterized in that** it comprises a connecting arm (36) provided with first and second opposite ends respectively rotationally mounted on the said second (10) and third (30) flaps in such a way as to couple their displacements.

7. Device according to Claim 6, **characterized in that** the said third flap (30) comprises a cam track (32) in which a rotational axis (33) belonging to the said second connecting arm (36) can shift.

8. Device according to Claim 6, **characterized in that** it comprises a cam track (37) in which the said second rotational axis (31) of the said third flap (30) can shift in such a way as to displace the latter in the said downstream portion (17) of the mixing chamber (7).

9. Device according to one of Claims 3 to 8, **characterized in that** the said first (9) and second (10) flaps form a one-piece assembly.

10. Device according to one of Claims 3 to 9, **characterized in that** the said second flap (10) is a flag flap.

11. Device according to Claim 2, **characterized in that** the said third flap (11) is mounted pivotably about the said first axis (15) in such a way as to be set in rotation at the same time and in the same direction as the said first (9) and second (10) flaps in order to manage jointly with them the access of the said cold-air flow and hot-air flow to the said mixing chamber (7), the said first (9), second (10) and third (11) flaps constituting an assembly.

12. Device according to Claim 11, **characterized in that** the said assembly is of the one-piece type and comprises first and second flag flaps defining respectively the said second (10) and third (11) flaps.

13. Device according to Claim 11, **characterized in that** the said assembly comprises a first sub-assembly constituted by the said first flap (9), a second sub-assembly constituted by a first flag flap defining the said second flap (10), and a third sub-assembly constituted by a second flag flap defining the said third flap (11).

14. Device according to Claim 11, **characterized in that** the said assembly comprises a first sub-assembly constituted by the said first flap (9), and a second, one-piece assembly constituted by first and second flag flaps defining respectively the said second (10) and third (11) flaps.

15. Device according to Claim 11, **characterized in that** the said assembly comprises a first, one-piece sub-assembly constituted by the said first flap (9) and by a second, flag-type flap (10), and a second sub-assembly constituted by the said third flap (11) in flag-type form.

16. Device according to Claim 11, **characterized in that** the said assembly comprises a first sub-assembly constituted by the said first flap (9), and a second, one-piece assembly constituted by a butterfly flap (24) defining the said second (10) and third (11) flaps.

17. Device according to Claim 16, **characterized in that** the said butterfly flap (24) is configured in such a way as to deflect a part of the said hot-air flow into a zone of the said downstream portion (17) adjacent to the said second air-distribution duct (3).

18. Device according to Claim 11, **characterized in that** the said mixing chamber (7) is sub-divided by partitions (45) into at least three sub-portions, **in that** the said second air-flow distribution duct (3) is sub-divided into at least three sub-ducts (3a-3c), and **in that** the said assembly comprises a first sub-assembly of two flaps (9a, 10a) arranged in such a way as to manage jointly the access to a first of the said sub-portions and to a first (3a) of the said sub-ducts, a second sub-assembly of two flaps (9b, 10b) arranged in such a way as to manage jointly the access to a second of the said sub-portions and to a second (3b) of the said sub-ducts, and a third flap (11) arranged in such a way as to manage the access to a third of the said sub-portions and to a third (3c) of the said sub-ducts.

19. Device according to Claim 18, **characterized in that** the said third flap (11) is placed at an intermediate level between, on the one hand, the said first sub-assembly of two flaps (9a, 10a) and, on the other hand, the said second sub-assembly of two flaps (9b, 10b).

20. Device according to one of Claims 18 and 19, **characterized in that** at least one flap (10a, 10b) of each of the first and second sub-assemblies, and the said third flap (11), are of the flag type.

21. Device according to one of Claims 1 to 20, **characterized in that** the said third flap (11, 21, 22) is configured in such a way as to deflect and/or calibrate a part of the said hot-air flow into a first zone of the said downstream portion (17) adjacent to the said second air-distribution duct (3), and another part of the said hot-air flow and/or the said cold-air flow, emanating from the said upstream portion (16), into a second zone of the said downstream portion (17) distant from the said first zone.

22. Device according to Claim 21, **characterized in that** the said second zone is adjacent to the said first air-distribution duct (2).

23. Device according to one of Claims 1 to 22, **characterized in that** it comprises a wall (8) delimiting at the same time a portion of the said second air-distribution duct (3) and a portion of the said hot-air flow feed duct (5) and containing an end portion (23) implanted in the said downstream portion (17) and configured in such a way as to orientate and/or calibrate a part at least of the said hot-air flow towards a chosen zone of the said downstream portion (17).

24. Device according to one of Claims 1 to 23, **characterized in that** the said first flap (9) is a drum flap.

25. Device according to one of Claims 1 to 24, **characterized in that** at least one of the said first (2) and second (3) air-distribution ducts is sub-divided into at least first (2-1) and second (2-2) sub-ducts, and **in that** it comprises at least some auxiliary control means (40) containing fourth (41) and fifth (42) flaps each provided with respective closure walls (43, 44) and mounted pivotably about the same axis (45) in such a way as to be set in rotation at the same time and in the same direction in order to manage jointly the access to the said first (2-1) and second (2-2) sub-ducts of a treated air flow emanating from the said mixing chamber (7).

26. Device according to Claim 25, **characterized in that** the said fifth flap (42) is a butterfly flap.

27. Device according to one of Claims 25 and 26, **characterized in that** the said fourth flap (41) is a drum flap.

28. Device according to one of Claims 25 to 27, **characterized in that** the said fourth (41) and fifth (42) flaps form a one-piece assembly.

## Patentansprüche

1. Heiz- und/oder Klimatisierungsvorrichtung einer Fahrgastzelle, insbesondere für Kraftfahrzeug, die mindestens eine Kaltluftstrom-Versorgungsleitung (4), mindestens eine Warmluftstrom-Versorgungsleitung (5), die einen Heizkörper (6) aufnimmt, mindestens eine erste Luftstrom-Verteilungsleitung (2) und eine zweite Luftstrom-Verteilungsleitung (3), mindestens eine Luftmischkammer (7), die mit den Kaltluftstrom- und Warmluftstrom-Versorgungsleitungen und mit der ersten und der zweiten Verteilungsleitung kommuniziert, und Steuermittel, die eine erste Klappe (9) und eine zweite Klappe (10) aufweisen, die jeweils mit einer Verschlusswand (12, 13) versehen und schwenkend um eine gleiche erste Achse (15) installiert sind, um das Eintreten des Kaltluftstroms und des Warmluftstroms in die Mischkammer (7) zu verwalten, aufweist, **dadurch gekennzeichnet**, die erste Achse (15) derart installiert ist, dass sich die zweite Klappe (10) zwischen der geschlossenen und der offenen Position bewegen kann, in welchen sie das Eintreten eines Teils des Warmluftstroms in einen stromaufwärtigen Teil (16) der Mischkammer (7) untersagt oder gestattet, dass die Steuermittel eine dritte Klappe (11; 28; 30) aufweisen, die mit einer Verschlusswand (14) versehen ist, die das Eintreten eines Teils zumindest des Warmluftstroms in einen stromabwärtigen Teil (17) der Mischkammer(7), der mit dem stromaufwärtigen Teil (16) und mit der ersten Luftverteilungsleitung (2) und der zweiten Luftverteilungsleitung (3) kommuniziert, verwalten kann.

2. Vorrichtung nach Anspruch 1, **dadurch gekennzeichnet, dass** die erste Klappe (9) und die zweite Klappe (10) schwenkend um die erste Achse (15) so installiert sind, dass sie gleichzeitig und in die gleiche Richtung in Drehung angetrieben werden, um gemeinsam das Eintreten des Kaltluftstroms und des Warmluftstroms in die Mischkammer (7) verwalten.

3. Vorrichtung nach einem der Ansprüche 1 und 2, **dadurch gekennzeichnet, dass** die dritte Klappe (28; 30) schwenkend um eine zweite Rotationsachse (29; 31), die von der ersten Achse (15) beabstandet ist, installiert ist.

4. Vorrichtung nach Anspruch 3, **dadurch gekennzeichnet, dass** die dritte Klappe (28) eine Drosselklappe ist.

5. Vorrichtung nach Anspruch 3, **dadurch gekennzeichnet, dass** die dritte Klappe (30) eine Flaggenklappe ist.

6. Vorrichtung nach Anspruch 5, **dadurch gekennzeichnet, dass** sie einen Verbindungsarm (36) aufweist, der mit einem entgegengesetzten ersten und zweiten Ende versehen ist, die jeweils in Drehung auf der zweiten Klappe (10) und der dritten Klappe (30) so installiert sind, dass sie ihre Bewegungen koppeln.

7. Vorrichtung nach Anspruch 6, **dadurch gekennzeichnet, dass** die dritte Klappe (30) einen Nockenlauf (32) aufweist, in dem sich eine Rotationsachse (33) bewegen kann, die das zweite Ende des Verbindungsarms (36) aufweist.

8. Vorrichtung nach Anspruch 6, **dadurch gekennzeichnet, dass** sie einen Nockenlauf (37) aufweist, in dem sich die zweite Rotationsachse (31) der dritten Klappe (30) so bewegen kann, dass sie in den stromabwärtigen Teil (17) der Mischkammer (7) bewegt wird.

9. Vorrichtung nach einem der Ansprüche 3 bis 8, **dadurch gekennzeichnet, dass** die erste Klappe (9) und die zweite Klappe (10) eine einstückige Einheit bilden.

10. Vorrichtung nach einem der Ansprüche 3 bis 9, **dadurch gekennzeichnet, dass** die zweite Klappe (10) eine Flaggenklappe ist.

11. Vorrichtung nach Anspruch 2, **dadurch gekennzeichnet, dass** die dritte Klappe (11) schwenkend um die erste Achse (15) so installiert ist, dass sie in Drehung gleichzeitig und in die gleiche Richtung wie die erste Klappe (9) und die zweite Klappe (10) angetrieben wird, um gemeinsam mit diesen das Eintreten des Kaltluftstroms und des Warmluftstroms in die Mischkammer (7) zu verwalten, wobei die erste Klappe (9), zweite Klappe (10) und dritte Klappe (11) eine Einheit bilden.

12. Vorrichtung nach Anspruch 11, **dadurch gekennzeichnet, dass** die Einheit einstückig ist und eine erste Flaggenklappe und eine zweite Flaggenklappe aufweist, die jeweils die zweite Klappe (10) und die dritte Klappe (11) definieren.

13. Vorrichtung nach Anspruch 11, **dadurch gekennzeichnet, dass** die Einheit eine erste Unterbaugruppe aufweist, die aus der ersten Klappe (9) besteht, eine zweite Unterbaugruppe, die aus einer ersten Flaggenklappe besteht, die die zweite Klappe (10) definiert, und aus einer dritten Unterbaugruppe, die aus einer zweiten Flaggenklappe besteht, die die dritte Klappe (11) definiert.

14. Vorrichtung nach Anspruch 11, **dadurch gekennzeichnet, dass** die Einheit eine erste Unterbaugruppe aufweist, die aus der ersten Klappe (9) besteht, eine zweite einstückige Unterbaugruppe, die aus einer ersten Flaggenklappe und einer zweiten Flaggenklappe besteht, die jeweils die zweite Klappe (10) und die dritte Klappe (11) definieren.

15. Vorrichtung nach Anspruch 11, **dadurch gekennzeichnet, dass** die Einheit eine erste einstückige Einheit aufweist, die aus der ersten Klappe (9) und einer zweiten Klappe (10) des Flaggentyps besteht, und eine zweite Unterbaugruppe, die aus der dritten Klappe (11) in Form einer Flaggenklappe besteht.

16. Vorrichtung nach Anspruch 11, **dadurch gekennzeichnet, dass** die Einheit eine erste Unterbaugruppe aufweist, die aus der ersten Klappe (9) besteht, und eine zweite einstückige Unterbaugruppe, die aus einer Drosselklappe (24) besteht, die die zweite Klappe (10) und die dritte Klappe (11) definiert.

17. Vorrichtung nach Anspruch 16, **dadurch gekennzeichnet, dass** die Drosselklappe (24) so ausgebildet ist, dass sie einen Teil des Warmluftstroms in einen Bereich des stromabwärtigen Teils (17) neben der zweiten Luftverteilungsleitung (3) ablenkt.

18. Vorrichtung nach Anspruch 11, **dadurch gekennzeichnet, dass** die Mischkammer (7) von Wänden (45) in mindestens drei Unterteile geteilt wird, dass die zweite Luftstrom-Verteilungsleitung (3) in mindestens drei Unterleitungen (3a-3c) unterteilt ist, und dass die Einheit eine erste Unterbaugruppe aus zwei Klappen (9a, 10a) aufweist, die so angeordnet sind, dass sie gemeinsam das Eintreten in einen ersten der Unterteile und eine erste (3a) der Unterleitungen verwalten, eine zweite Unterbaugruppe aus zwei Klappen (9b, 10b), die so eingerichtet sind, dass sie gemeinsam das Eintreten in einen zweiten Unterteil und eine zweite (3b) der Unterleitungen verwalten, und eine dritte Klappe (11), die so eingerichtet ist, dass sie das Eintreten in einen dritten Unterteil und in eine dritte (3c) der Unterleitungen verwaltet.

19. Vorrichtung nach Anspruch 18, **dadurch gekennzeichnet, dass** die dritte Klappe (11) auf einer Zwischenebene einerseits zwischen der ersten Unterbaugruppe aus zwei Klappen (9a, 10a) und andererseits der zweiten Unterbaugruppe aus zwei Klappen (9b, 10b) angeordnet ist.

20. Vorrichtung nach einem der Ansprüche 18 und 19, **dadurch gekennzeichnet, dass** mindestens eine Klappe (10a, 10b) jeder der ersten und zweiten Unterbaugruppe und die dritte Klappe (11) Flaggenklappen sind.

21. Vorrichtung nach einem der Ansprüche 1 bis 20, **dadurch gekennzeichnet, dass** die dritte Klappe (11, 21, 22) so ausgebildet ist, dass sie einen Teil des Warmluftstroms in einen ersten Bereich des stromabwärtigen Teils (17) neben der zweiten Luftverteilungsleitung (3) und einen anderen Teil des Warmluftstrom und/oder des Kaltluftstroms, der aus dem stromaufwärtigen Teil (16) stammt, in einen zweiten Bereich des stromabwärtigen Teils (17), der von dem ersten Bereich beabstandet ist, ablenkt und/oder kalibriert.

22. Vorrichtung nach Anspruch 21, **dadurch gekennzeichnet, dass** der zweite Bereich neben der ersten Luftverteilungsleitung (2) liegt.

23. Vorrichtung nach einem der Ansprüche 1 bis 22, **dadurch gekennzeichnet, dass** sie eine Wand (8) aufweist, die gleichzeitig einen Teil der zweiten Luftverteilungsleitung (3) und einen Teil der Warmluftstrom-Versorgungsleitung (5) abgrenzt und einen Endteil (23) aufweist, der in dem stromabwärtigen Teil (17) untergebracht und so ausgebildet ist, dass sie zumindest einen Teil des Warmluftstroms zu einem ausgewählten Bereich des stromabwärtigen Teils (17) lenkt und/oder kalibriert.

24. Vorrichtung nach einem der Ansprüche 1 bis 23, **dadurch gekennzeichnet, dass** die erste Klappe (9) eine Trommelklappe ist.

25. Vorrichtung nach einem der Ansprüche 1 bis 24, **dadurch gekennzeichnet, dass** mindestens die erste Luftverteilungsleitung (2) oder die zweite Luftverteilungsleitung (3) in mindestens eine erste (2-1) und eine zweite (2-2) Unterleitung geteilt ist, und dass sie mindestens Hilfssteuermittel (40) aufweist, die eine vierte Klappe (41) und eine fünfte Klappe (42) aufweisen, die jeweils mit einer Verschlusswand (43, 44) versehen und schwenkend um eine gleiche Achse (45) so installiert sind, dass sie gleichzeitig und in die gleiche Richtung in Drehung angetrieben werden, um gemeinsam das Eintreten eines aufbereiteten Luftstroms, der von der Mischkammer (7) kommt, in die erste (2-1) und zweite (2-2) Unterleitung verwalten.

26. Vorrichtung nach Anspruch 25, **dadurch gekennzeichnet, dass** die fünfte Klappe (42) eine Drosselklappe ist.

27. Vorrichtung nach einem der Ansprüche 25 und 26, **dadurch gekennzeichnet, dass** die vierte Klappe (41) eine Trommelklappe ist.

28. Vorrichtung nach einem der Ansprüche 25 bis 27, **dadurch gekennzeichnet, dass** die vierte Klappe (41) und die fünfte Klappe (42) eine einstückige Einheit bilden.
